# EUROPEAN PATENT SPECIFICATION

(11) **EP 3 174 325 B1**
(45) Date of publication and mention of the grant of the patent: **12.09.2018**
(21) Application number: 15825357.5
(22) Date of filing: 20.03.2015
(51) Int. Cl.: H04W 8/18, H04W 88/08, H04L 12/24, H04L 29/06, H04W 36/00, H04W 12/00, H04W 12/12, H04W 12/08, H04W 12/06, H04W 12/02, H04W 84/12

(54) **HOTSPOT CONFIGURATION METHOD, ACCESS METHOD AND DEVICE IN WIRELESS LOCAL AREA NETWORK**
HOTSPOT-KONFIGURATIONSVERFAHREN, ZUGANGSVERFAHREN UND VORRICHTUNG IN EINEM WLAN
PROCÉDÉ DE CONFIGURATION DE POINT D'ACCÈS, PROCÉDÉ D'ACCÈS ET DISPOSITIF DANS UN RÉSEAU LOCAL SANS FIL

(30) Priority: 24.07.2014 CN 201410356304
(43) Date of publication of application: 31.05.2017
(73) Proprietor: ZTE Corporation, Shenzhen, Guangdong 518057 (CN)
(72) Inventor: MA, Lan, Shenzhen Guangdong 518057 (CN); YANG, Cuihong, Shenzhen Guangdong 518057 (CN); ZHANG, Baisheng, Shenzhen Guangdong 518057 (CN)
(74) Representative: Savi, Massimiliano
(86) International application number: PCT/CN2015/074785
(87) International publication number: WO 2016/011824

(56) References cited:
- CN-A- 101 489 222
- CN-A- 101 626 609
- CN-A- 103 458 408
- CN-A- 104 168 561
- US-A1- 2012 072 976
- US-A1- 2013 347 073

## Description

### Technical Field

The present invention relates to the field of wireless communication in a mobile communication system, and more particularly, to a hotspot configuration method, access method and device in a wireless local area network (WLAN).

### Background

WLAN refers to using wireless communication technologies to interconnect computer devices to constitute into a network system achieving inter-communication and resources sharing. The wireless LAN is characterized by the nature that computers are connected to a network in a wireless manner rather than by using communication cables, so that the construction of the network and the mobility of terminals are more flexible.

The wireless fidelity (WiFi) technology is essentially a commercial certification. Wi-Fi certified products meet the IEEE 802.11b wireless network specification which is currently the most widely used standard in WLAN and the band of which is 2.4GHz. In the worldwide, the WiFi-based WLAN has become increasingly popular, and its coverage is more and more widespread. The WLAN has become a new lifestyle of more and more people, especially of young people, due to WLAN's charm of infinite freedom. People want to use the WLAN for quickly and easily surfing the Internet, browsing or downloading information in more and more public places.

Faced with the conflict between the growing mobile data needs and the bottleneck of traffic in the mobile data network, operators have been already aware that the WLAN will become an important mobile Internet access service, and they deploy the WLAN in advance and expand the scale of WLAN coverage.

In the related art, the WLAN can be deployed in two ways: the first way, deploying the WLAN in an encrypted manner; and the second way, deploying the WLAN in an unencrypted manner.

In the process of implementing the present invention, at least the following drawbacks have been found in the existing WLAN deployment schemes:
1) The first way deploys the WLAN in an encrypted way. When users connect to the WLAN, they need to acquire key information through a certain channel such as a way of inquiry. In such a way, it is not convenient for users to use the WLAN in public places.
2) The second way deploys the WLAN in an unencrypted way, i.e., an Open way. The users do not need a key to connect to the WLAN, and they can use it easily. However, currently most public WiFi environments lack or even have no security and protection measures, so it results in that attackers can easily access the WLAN and intercept data in the WLAN through network monitoring. In this case, any information transferred by the users in the WLAN will be exposed to the attackers, and the attackers can intercept user information such as user name, password, Internet records, device information, chat records and e-mail content. Therefore, using the Open way to deploy the WLAN has a great security risk and seriously threats the information security of the users.

In addition, in the second way, when a user establishes a connection with the WLAN, the user is first redirected to a user login page by a way of WEB Portal, and then the user is asked to enter a user name and a password to authenticate the user identity. However, the identity authentication is mainly used for identifying the user identity and billing processing, but does not help to protect a communication link of the user accessing to the WLAN.

US 2013/0347073A1 discloses a system for authorizing the client device for secured access at the hotspot includes an access controller configured to establish an encrypted connection between the client device and a login portal of the hotspot over the open wireless network.

US 2012/0072976A1 discloses a secure network access point transmits a beacon transmission.

### Summary

In view of this, embodiments of the present invention desires to provide a hotspot configuration method, access method and device in a WLAN to ensure the security of data communication in the WLAN on the premise of not affecting the user experience.

The technical scheme of the present invention is implemented as follows.

An embodiment of the present invention provides a hotspot configuration method in a WLAN. The method includes: a wireless access point configuring a first hotspot with an unencrypted attribute and a second hotspot with an encrypted attribute, herein a service set identifier, SSID, of the first hotspot is the same as an SSID of the second hotspot; and configuring a switching policy between the first hotspot and the second hotspot, herein the switching policy is used for switching a communication between a terminal and the first hotspot to a communication between the terminal and the second hotspot.

An embodiment of the present invention provides an access method in a WLAN. The method includes: configuring a first hotspot with an unencrypted attribute and a second hotspot with an encrypted attribute, and a switching policy between the first hotspot and the second hotspot, herein a service set identifier, SSID, of the first hotspot is the same as an SSID of the second hotspot; and the method further includes: a wireless access point receiving a WPS request message sent by a terminal through a first link; transferring the WPS request message from the first link corresponding to the first hotspot to a second link corresponding to the second hotspot according to the switching policy between the first hotspot and the second hotspot, and establishing a WPS session negotiation procedure with the terminal through the second link; herein, the first link is a link established between the terminal and the first hotspot, and the second link is a link established between the terminal and the second hotspot.

According to the abovementioned method, an embodiment of the present invention provides a wireless access point. The wireless access point includes: a first configuration module and a second configuration module.

The first configuration module is arranged to configure a first hotspot with an unencrypted attribute and a second hotspot with an encrypted attribute, herein an SSID of the first hotspot is the same as an SSID of the second hotspot.

The second configuration module is arranged to configure a switching policy between the first hotspot and the second hotspot, herein the switching policy is used for switching a communication between a terminal and the first hotspot to a communication between the terminal and the second hotspot.

According to the abovementioned method, an embodiment of the present invention also provides a wireless access point. The wireless access point includes: a first configuration module, a second configuration module, a receiving module and a connection management module.

The first configuration module is arranged to configure a first hotspot with an unencrypted attribute and a second hotspot with an encrypted attribute, herein an SSID of the first hotspot is the same as an SSID of the second hotspot.

The second configuration module is arranged to configure a switching policy between the first hotspot and the second hotspot, herein the switching policy is used for switching a communication between a terminal and the first hotspot to a communication between the terminal and the second hotspot.

The receiving module is arranged to receive a WPS request message sent by the terminal through a first link.

The connection management module is arranged to transfer the WPS request message from the first link corresponding to the first hotspot to a second link corresponding to the second hotspot according to the switching policy between the first hotspot and the second hotspot, and establish a WPS session negotiation procedure with the terminal through the second link; herein, the first link is a link established between the terminal and the first hotspot, and the second link is a link established between the terminal and the second hotspot.

In the hotspot configuration method, access method and device in the WLAN provided by the embodiments of the present invention, a wireless access point configures a first hotspot with an unencrypted attribute and a second hotspot with an encrypted attribute, and an SSID of the first hotspot is the same as an SSID of the second hotspot; and configures a switching policy between the first hotspot and the second hotspot. Herein the switching policy is used for switching a communication between a terminal and the first hotspot to a communication between the terminal and the second hotspot. In such a way, with the embodiments of the present invention, the first hotspot with the unencrypted attribute is configured for users easily accessing the WLAN; the second hotspot with the encrypted attribute is configured to further ensure the security of the communication link in the WLAN; and, a communication connection can be established between the first hotspot and the second hotspot through the switching policy between the first hotspot and the second hotspot.

Alternatively, in an embodiment of the present invention, after configuring the first hotspot, the second hotspot and the switching policy between the first hotspot and the second hotspot, a WPS request message sent by the terminal can be received through a first link, and the WPS request message is transferred from the first link corresponding to the first hotspot to a second link corresponding to the second hotspot according to the switching policy between the first hotspot and the second hotspot, and a WPS session negotiation procedure is established with the terminal through the second link. Herein, the first link is a link established between the terminal and the first hotspot, and the second link is a link established between the terminal and the second hotspot. In this way, the embodiment of the present invention automatically switches the terminal from the first link with a lower security level to the second link with a higher security level, so that the security of the communication link in the WLAN can be guaranteed on the premise of not affecting the user experience.

### Brief Description of the Drawings

FIG. 1 is a flow chart of an implementation process of a hotspot configuration in a wireless local area network according to an embodiment of the present invention;
FIG. 2 is a flow chart of an implementation process of an access method in a wireless local area network according to an embodiment of the present invention;
FIG. 3 is a flow chart of an implementation process of an access method in a wireless local area network according to an Embodiment One of the present invention;
FIG. 4 is a flow chart of an implementation process of an access method in a wireless local area network according to an Embodiment Two of the present invention;
FIG. 5 is a schematic diagram of a composition structure of a wireless access point according to an embodiment of the present invention; and
FIG. 6 is a schematic diagram of a composition structure of another wireless access point according to an embodiment of the present invention.

### Detailed Description

In the embodiments of the present invention, a wireless access point (AP) first configures a first hotspot with an unencrypted attribute and a second hotspot with an encrypted attribute, and an SSID of the first hotspot is the same as an SSID of the second hotspot. The wireless AP configures a switching policy between the first hotspot and the second hotspot. The switching policy is used for switching a communication between a terminal and the first hotspot to a communication between the terminal and the second hotspot. Thereafter, when a user accesses the WLAN, a WPS request message sent by the terminal is received through a first link. Then WPS request message is transferred from the first link corresponding to the first hotspot to the second link corresponding to the second hotspot according to the switching policy between the first hotspot and the second hotspot, and a WPS session negotiation procedure is established with the terminal through the second link. Herein, the first link is a link established between the terminal and the first hotspot, and the second link is a link established between the terminal and the second hotspot.

Herein, one hotspot corresponds to one virtual local area network (VLAN) in the WLAN, and network parameters of the hotspot include: an SSID, a security type, a network type, and the like. The network parameters of the first hotspot with the unencrypted attribute include: an SSID1, the security type which is an unencrypted type, and the network type which is a broadcasting type. The network parameters of the second hotspot with the encrypted attribute include: an SSID2, the security type which is an encrypted type, and the network type which is a non-broadcasting type. The SSID1 is the same as the SSID2.

In the following, the method and device of the present invention will be further described in combination with the accompanying drawings and specific embodiments.

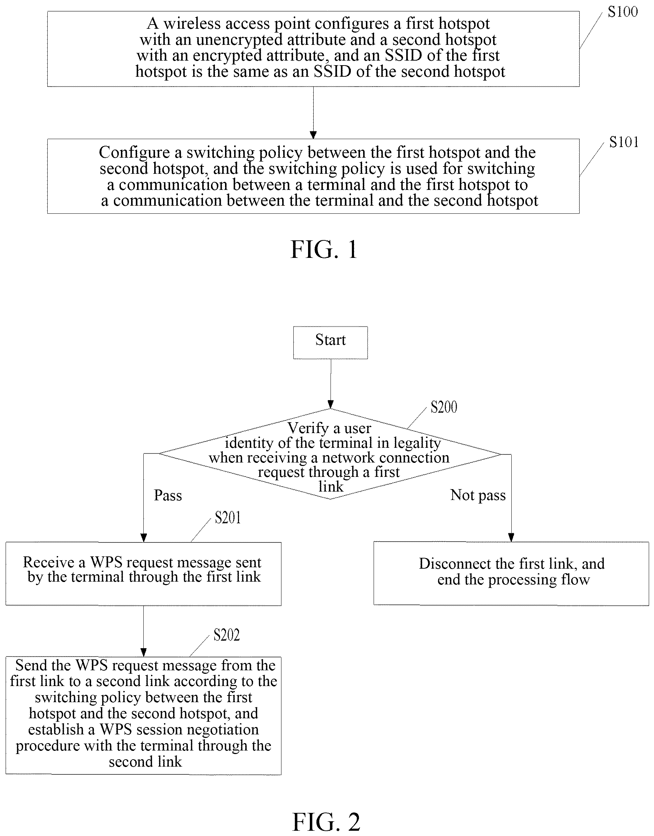

An embodiment of the present invention provides a hotspot configuration method in a WLAN, and as shown in FIG. 1, the method includes the following steps.

In step S100: the wireless AP configures a first hotspot with an unencrypted attribute and a second hotspot with an encrypted attribute, and a service set identifier of the first hotspot is the same as a service set identifier of the second hotspot.

Herein, the network parameters of the first hotspot are configured as: an SSID1, a security type being an unencrypted type, and a network type being a broadcasting type. The network parameters of the second hotspot are: an SSID2, a security type being an encrypted type, and a network type being a non-broadcasting type. The SSID1 is the same as the SSID2.

Herein, the unencrypted type may be thane Open type. The encrypted type may be a WiFi Protected Access (WPA) or a WPA2 encrypted type. The unencrypted type and the encrypted type are not particularly limited.

Herein, the SSID1 of the first hotspot which is configured with the broadcasting type is visible, and the SSID2 of the second hotspot which is configured with the non-broadcasting type is invisible. When the terminal is within the network range of the public WLAN deployed by an operator, the user opens a WiFi connection function of the terminal, and the terminal can automatically searches out the first hotspot with the Open type by the WiFi connection function. Since the second hotspot is configured with a network type that does not broadcast the SSID, the terminal cannot search out the second hotspot by the conventional WiFi connection function.

Alternatively, it can be expanded to configure N mutually independent hotspots, where N is a positive integer. Correspondingly, corresponding network parameters are configured for each hotspot. Herein, the SSIDs of respective hotspots are the same. The network parameters corresponding to at least one hotspot in the N mutually independent hotspots are configured as: the network type which is the broadcasting type, and the security type which is the unencrypted type, so that the user can easily access the WLAN. The network parameters corresponding to at least one hotspot are configured as: the network type which is the non-broadcasting type, and the security type which is the encrypted type, so as to ensure the security of the communication link in the WLAN.

In step S101: a switching policy between the first hotspot and the second hotspot is configured, and the switching policy is used for switching a communication between a terminal and the first hotspot to a communication between the terminal and the second hotspot.

Herein, the switching policy is a connection switching policy between network parameters corresponding to the first hotspot and the second hotspot, and a connection channel is established between a network corresponding to the first hotspot and a network corresponding to the second hotspot according to the switching policy, so as to transfer messages in a WPS session negotiation procedure subsequently.

In the embodiment of the present invention, the first hotspot of which the network type is the broadcasting type and the security type is the unencrypted type is configured to facilitate the user to access the WLAN. The second hotspot of which the network type is the non-broadcasting type and the security type is the encrypted type is configured to ensure the security of the communication link in the WLAN. And, a communication connection between the first hotspot and the second hotspot can be established based on the switching policy between the first hotspot and the second hotspot to subsequently transfer the messages in the WPS session negotiation procedure.

Based on the abovementioned method, an embodiment of the present invention provides an access method in a WLAN. The wireless AP pre-configures a first hotspot, a second hotspot, and a switching policy between the first hotspot and the second hotspot; thereafter, when a user accesses the WLAN, the following steps are included as shown in FIG. 2.

In step S201: the wireless AP receives a WPS request message sent by a terminal through a first link.

Herein, the first link is a link established between the terminal and the first hotspot.

In step S202: a connection channel between a network corresponding to the first hotspot and a network corresponding to the second hotspot is established according to the switching policy between the first hotspot and the second hotspot, and the WPS request message is sent from the first link corresponding to the first hotspot to a second link corresponding to the second hotspot through the connection channel.

Herein, the connection channel between the network corresponding to the first hotspot and the network corresponding to the second hotspot is established according to the switching policy between the first hotspot and the second hotspot. The WPS request message is transferred from the first link corresponding to the first hotspot to the second link corresponding to the second hotspot through the connection channel.

Herein, the first link is a link established between the terminal and the first hotspot, and the second link is a link established between the terminal and the second hotspot.

Alternatively, before receiving through the first link the WPS request message sent by the terminal, the method further includes: in step S200: a user identity of the terminal is verified in legality when receiving through the first link the network connection request sent by the terminal. If the verification is passed, a WPS session negotiation procedure is established with the terminal through the first link, and step S201 is proceeded. If the verification is not passed, the first link between the terminal and the first hotspot is disconnected, and the processing flow ends.

Herein, the specific implementation of verifying the user identity of the terminal in legality is as follows.

The network connection request is redirected to a Web authentication server set by the operator for access. At this time, the terminal can enter into a Web authentication website through a Web browser, and input a user name and a password of a WiFi service for verifying the WiFi service. The Web authentication server obtains the user name and the password input by the user, verifies the user identity of the terminal in legality according to the obtained user name and password, and then notifies the wireless AP and the terminal of a verification result.

In the embodiment of the present invention, after configuring the first hotspot, the second hotspot, and the switching policy between the first hotspot and the second hotspot, the WPS request message sent by the terminal can be received through the first link, the WPS request message is transferred from the first link corresponding to the first hotspot to the second link corresponding to the second hotspot according to the switching policy between the first hotspot and the second hotspot, and a WPS session negotiation procedure is established with the terminal through the second link. Herein, the first link is a link established between the terminal and the first hotspot, and the second link is a link established between the terminal and the second hotspot. Thus, the embodiment of the present invention automatically switches from the first link with a lower security level to the second link with a higher security level, thereby the security of the communication link in the WLAN can be ensured on the premise of not affecting the user experience.

In order to explain the embodiments of the present invention more clearly, the access flow in the WLAN according to the embodiments of the present invention will be described in detail by taking an Embodiment One and an Embodiment Two hereinafter.

### Embodiment One

In the Embodiment One, a first hotspot with an unencrypted attribute and a second hotspot with an encrypted attribute, and a switching policy between the first hotspot and the second hotspot are pre-configured. Herein, the network parameters of the first hotspot are configured as: an SSID1 is Chinanet, a security type is an Open type, and a network type is a broadcasting type. The network parameters of the second hotspot are configured as: an SSID2 is Chinanet, a security type is a WAP2 encrypted type, and a network type is a non-broadcasting type.

When the current location of the terminal is within the network range of the public WLAN deployed by the operator, the user opens a WiFi function of the terminal, and automatically searches out and displays visible hotspots within the current WLA network range through the WiFi function. The user selects and connects to the first hotspot of which the service set identifier is Chinanet, and establishes an Open link with the first hotspot.

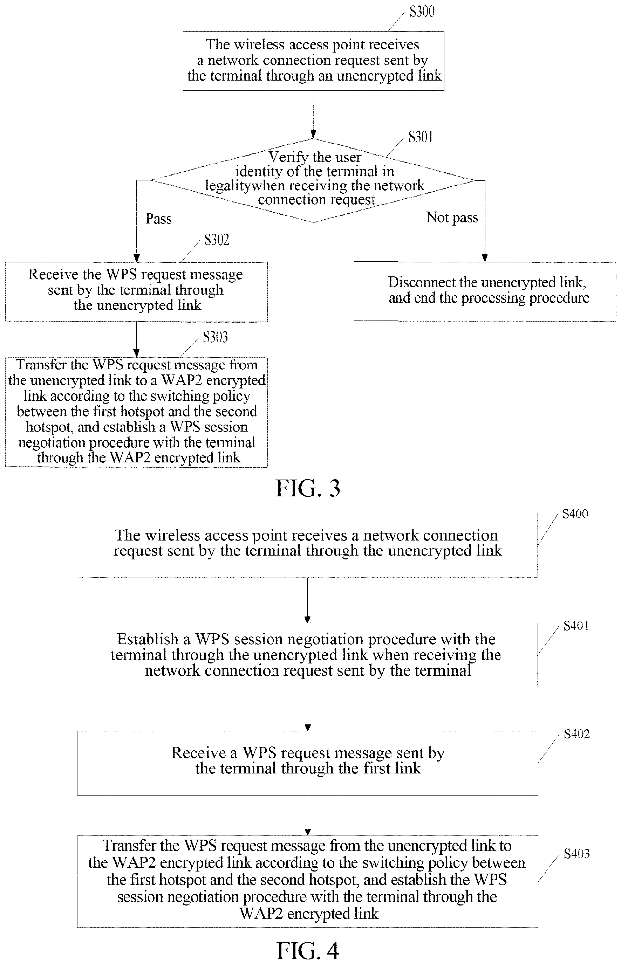

The access flow in the WLAN according to the Embodiment One specifically includes, as shown in FIG. 3, the following steps.

In step S300: the wireless AP receives the network connection request sent by the terminal through the Open link.

In step S301: when receiving the network connection request sent by the terminal, the user identity of the terminal is verified in legality; if the verification is passed, the WPS session negotiation procedure is established with the terminal through the Open link, and step S302 is proceeded; if the verification is not passed, the Open link between the terminal and the first hotspot is disconnected, and the processing flow ends.

Herein, the specific implementation of verifying the user identity of the terminal in legality is as follows.

The network connection request is redirected to a Web authentication server set by the operator for access. At this time, the terminal can enter into a Web authentication website through a Web browser, and input a user name and a password of a WiFi service for verifying the WiFi service. The Web authentication server obtains the user name and the password input by the user, verifies the user identity of the terminal in legality according to the obtained user name and password, and then notifies the wireless AP and the terminal of a verification result to instruct the terminal to initiate a WPS processing flow.

Herein, when receiving a verification passed message, the terminal itself initiates the WPS processing flow, and sends the WPS request message to the wireless AP based on the established Open link at the same time.

In step S302: the WPS request message sent by the terminal is received through the Open link.

Herein, first the WPS session negotiation procedure is established with the terminal through the Open link, and the WPS request message sent by the terminal is received.

In step S303: the WPS request message is transferred from the Open link corresponding to the first hotspot to the WAP2 encrypted link corresponding to the second hotspot according to the switching policy between the first hotspot and the second hotspot, and the WPS session negotiation procedure is established with the terminal through the WAP2 encrypted link.

Herein, negotiating a key with the terminal and establishing data connection in the second link can ensure the security of the communication link in the WLAN.

In the network connection process of the Embodiment One of the present invention, the operation procedure of the terminal is consistent with the operation procedure of connecting to the existing Open hotspot, and the terminal can establish a corresponding WPA2 protected encrypted link with the second hotspot without inputting the password of the second hotspot, then data are transmitted through the WPA2-protected encrypted link. In this way, the terminal can automatically switch from the Open link corresponding to the first hotspot to which is initially connected to the WPA2-protected encrypted link corresponding to the second hotspot, and perform the data transmission through the WPA2-protected encrypted link, so as to ensure the security of the communication link in the WLAN on the premise of not affecting the user experience.

### Embodiment Two

Based on the configurations in the abovementioned Embodiment One, when the current location of the terminal is within the network range of the public WLAN deployed by the operator, the user opens the WiFi function of the terminal and automatically searches out and displays visible hotspots within the current WLA network range through the WiFi function. The user selects and connects to the first hotspot of which the service set identifier is Chinanet, and establishes an Open link with the first hotspot.

The access flow in the WLAN in the Embodiment Two specifically includes, as shown in FIG. 4, the following steps.

In step S400: the wireless AP receives the network connection request sent by the terminal through the Open link.

In step S401: the WPS session negotiation procedure is established with the terminal through the Open link when the network connection request sent by the terminal is received.

In step S402: the WPS request message sent by the terminal is received through the first link.

In step S403: the WPS request message is transferred from the Open link corresponding to the first hotspot to the WAP2 encrypted link corresponding to the second hotspot according to the switching policy between the first hotspot and the second hotspot, and the WPS session negotiation procedure is established with the terminal through the WAP2 encrypted link.

In order to realize the abovementioned methods, the embodiments of the present invention further provide two kinds of wireless APs. Since the principles and methods for the wireless APs solving the problems are similar, the implementation process and implementation principle of the wireless AP can refer to the implementation process and implementation principle described above, and will not be repeated here.

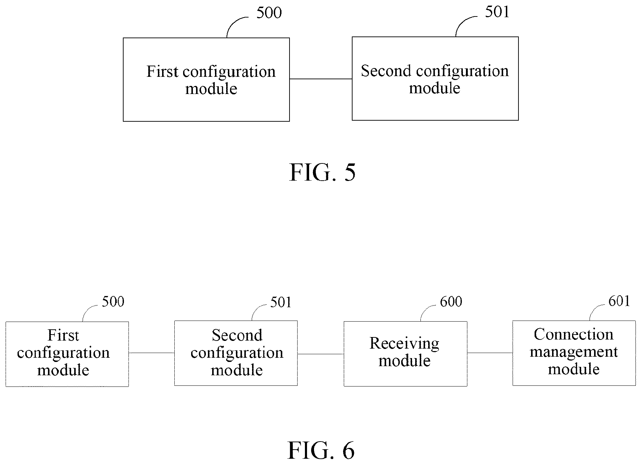

As shown in FIG. 5, an embodiment of the present invention provides a wireless AP, including: a first configuration module 500 and a second configuration module 501.

The first configuration module 500 is arranged to configure a first hotspot with an unencrypted attribute and a second hotspot with an encrypted attribute, herein an SSID of the first hotspot is the same as an SSID of the second hotspot.

Herein, the network parameters of the first hotspot include: an SSID1, a security type being an unencrypted type, and a network type being a broadcasting type; network parameters of the second hotspot include: an SSID2, a security type being an encrypted type, and a network type being a non-broadcasting type; wherein the SSID1 is the same as the SSID2.

Herein, the unencrypted network type is an Open type; and the encrypted network type is a WPA2 type.

The second configuration module 501 is arranged to configure a switching policy between the first hotspot and the second hotspot, herein the switching policy is used for switching a communication between a terminal and the first hotspot to a communication between the terminal and the second hotspot.

For convenience to describe, various parts of the abovementioned wireless access point are functionally divided into various modules or units respectively based on functions. The division of the above functional units or modules is only an alternative implementation provided by the embodiments of the present invention, and the division of the functional units or modules is not construed as limiting the present invention.

As shown in FIG. 6, an embodiment of the present invention provides another wireless AP, including: a first configuration module 500, a second configuration module 501, a receiving module 600 and a connection management module 601.

The first configuration module 500 is arranged to configure a first hotspot with an unencrypted attribute and a second hotspot with an encrypted attribute, herein, the SSID of the first hotspot is the same as the SSID of the second hotspot.

The second configuration module 501 is arranged to configure a switching policy between the first hotspot and the second hotspot, herein the switching policy is used for switching a communication between a terminal and the first hotspot to a communication between the terminal and the second hotspot.

The receiving module 600 is arranged to receive a WPS request message sent by the terminal through a first link.

The connection management module 601 is arranged to transfer the WPS request message from the first link corresponding to the first hotspot to a second link corresponding to the second hotspot according to the switching policy between the first hotspot and the second hotspot, and establish a WPS session negotiation procedure with the terminal through the second link; herein, the first link is a link established between the terminal and the first hotspot, and the second link is a link established between the terminal and the second hotspot.

In a specific implementation, the wireless AP further includes:
a verification module, arranged to verify a user identity of the terminal in legality when receiving a network connection request sent by the terminal through the first link, and establish a WPS session negotiation procedure with the terminal through the first link after the verification is passed.

For convenience to describe, various parts of the abovementioned wireless access point are functionally divided into various modules or units respectively based on functions. The division of the above functional units or modules is only an alternative implementation provided by the embodiments of the present invention, and the division of the functional units or modules is not construed as limiting the present invention.

In a practical application, the wireless AP may be a simple wireless access point, a wireless router, a wireless gateway, or a wireless bridge, etc., with the automatic switching link function.

In a practical application, the first configuration module 500 and the second configuration module 501 may be implemented by a central processor unit (CPU), a microprocessor unit (MPU), a digital signal processor (DSP), or a field programmable gate array (FPGA) located in the wireless AP. The first configuration module 500, the second configuration module 501, the receiving module 600, and the connection management module 601 are implemented by a central processor unit (CPU), a microprocessor unit (MPU), a digital signal processor (DSP), or a field programmable gate array (FPGA) located in the wireless access point.

The method according to the present invention is not limited to the examples in the specific embodiments. Other embodiments that are obtained by those skilled in the art according to the technical scheme of the present invention are within the scope of the technical innovation of the present invention.

It is apparent to those skilled in the art that, various changes and modifications can be made to the present invention without departing from the subject matter of the claims of the present invention. Thus, the present invention is construed as including such changes and modifications insofar as they are within the scope of the appended claims of the present invention.

### Industrial Applicability

Synthesized the embodiments of the present invention, a wireless access point configures a first hotspot with an unencrypted attribute for users easily accessing the WLAN, configures a second hotspot with an encrypted attribute to further ensure the security of the communication link in the WLAN, and can establish a communication connection between the first hotspot and the second hotspot through a switching policy between the first hotspot and the second hotspot. Moreover, it can automatically switch a terminal from a first link with the lower security level to a second link with the higher security level, so that the security of the communication link in the WLAN can be guaranteed on the premise of not affecting the user experience.

## Claims

1. A hotspot configuration method in a wireless local access network, WLAN, the method comprising:
configuring, by a wireless access point, a first hotspot with an unencrypted attribute and a second hotspot with an encrypted attribute, wherein the first hotspot and the second hotspot are configured in one wireless access point;
configuring a switching policy between the first hotspot and the second hotspot, wherein the switching policy is used for switching a communication between a terminal and the first hotspot to a communication between the terminal and the second hotspot; **characterized in that**,
the switching policy is a connection switching policy between network parameters corresponding to the first hotspot and the second hotspot, and a connection channel is established between a network corresponding to the first hotspot and a network corresponding to the second hotspot according to the switching policy.

2. The method of claim 1, wherein, network parameters of the first hotspot comprise: an SSID1, a security type being an unencrypted type, and a network type being a broadcasting type; and network parameters of the second hotspot comprise: an SSID2, a security type being an encrypted type, and a network type being a non-broadcasting type.

3. The method of claim 2, wherein, the unencrypted type is an Open type; and the encrypted type is a wireless fidelity Protected Access, WPA2, type.

4. The method of claim 1, wherein, a service set identifier, SSID, of the first hotspot is the same as an SSID of the second hotspot.

5. An access method in a wireless local access network, WLAN, comprising: configuring a first hotspot with an unencrypted attribute and a second hotspot with an encrypted attribute, and a switching policy between the first hotspot and the second hotspot, wherein the first hotspot and the second hotspot are configured in one wireless access point; the method further comprising:
receiving, by a wireless access point, a wireless fidelity Protected Setup, WPS, request message sent by a terminal through a first link;
transferring the WPS request message from the first link corresponding to the first hotspot to a second link corresponding to the second hotspot according to the switching policy between the first hotspot and the second hotspot, and establishing a WPS session negotiation procedure with the terminal through the second link; wherein, the first link is a link established between the terminal and the first hotspot, and the second link is a link established between the terminal and the second hotspot, **characterized in that**,
the connection channel between the network corresponding to the first hotspot and the network corresponding to the second hotspot is established according to the switching policy between the first hotspot and the second hotspot; the WPS request message is transferred from the first link corresponding to the first hotspot to the second link corresponding to the second hotspot through the connection channel.

6. The method of claim 5, wherein, before the receiving the WPS request message sent by the terminal through the first link, the method further comprises:
receiving a network connection request sent by the terminal through the first link;
verifying a user identity of the terminal in legality, and establishing a WPS session negotiation procedure with the terminal through the first link after the verification is passed.

7. The method of claim 5, wherein, a service set identifier, SSID, of the first hotspot is the same as an SSID of the second hotspot.

8. A wireless access point, AP, comprising: a first configuration module and a second configuration module; wherein,
the first configuration module is arranged to configure a first hotspot with an unencrypted attribute and a second hotspot with an encrypted attribute, wherein the first hotspot and the second hotspot are configured in one wireless access point;
the second configuration module is arranged to configure a switching policy between the first hotspot and the second hotspot, wherein the switching policy is used for switching a communication between a terminal and the first hotspot to a communication between the terminal and the second hotspot; **characterized in that**,
the switching policy is a connection switching policy between network parameters corresponding to the first hotspot and the second hotspot, and a connection channel is established between a network corresponding to the first hotspot and a network corresponding to the second hotspot according to the switching policy.

9. The wireless AP of claim 8, wherein, network parameters of the first hotspot comprise: an SSID1, a security type being an unencrypted type, and a network type being a broadcasting type; network parameters of the second hotspot comprise: an SSID2, a security type being an encrypted type, and a network type being a non-broadcasting type.

10. The wireless AP of claim 9, wherein, the unencrypted network type is an Open type; and the encrypted network type is a WPA2 type.

11. The wireless AP of claim 8, wherein, a service set identifier, SSID, of the first hotspot is the same as an SSID of the second hotspot.

12. A wireless access point, AP, comprising: a first configuration module, a second configuration module, a receiving module and a connection management module; wherein,
the first configuration module is arranged to configure a first hotspot with an unencrypted attribute and a second hotspot with an encrypted attribute, wherein the first hotspot and the second hotspot are configured in one wireless access point;
the second configuration module is arranged to configure a switching policy between the first hotspot and the second hotspot, wherein the switching policy is used for switching a communication between a terminal and the first hotspot to a communication between the terminal and the second hotspot;
the receiving module is arranged to receive a WPS request message sent by the terminal through a first link; and
the connection management module is arranged to transfer the WPS request message from the first link corresponding to the first hotspot to a second link corresponding to the second hotspot according to the switching policy between the first hotspot and the second hotspot, and establish a WPS session negotiation procedure with the terminal through the second link; wherein, the first link is a link established between the terminal and the first hotspot, and the second link is a link established between the terminal and the second hotspot, **characterized in that**,
the connection channel between the network corresponding to the first hotspot and the network corresponding to the second hotspot is established according to the switching policy between the first hotspot and the second hotspot; the WPS request message is transferred from the first link corresponding to the first hotspot to the second link corresponding to the second hotspot through the connection channel.

13. The wireless AP of claim 12, wherein, the wireless AP further comprises:
a verification module, arranged to verify a user identity of the terminal in legality when receiving a network connection request sent by the terminal through the first link, and establish a WPS session negotiation procedure with the terminal through the first link after the verification is passed.

14. The wireless AP of claim 12, wherein, a service set identifier, SSID, of the first hotspot is the same as an SSID of the second hotspot.

15. A computer-readable medium comprising instructions which, when executed by a computer, cause the computer to carry out the method of any one of claims 1-7.

## Patentansprüche

1. Ein Hotspot-Konfigurationsverfahren in einem drahtlosen lokalen Zugangsnetzwerk, WLAN, wobei das Verfahren Folgendes umfasst:
Konfigurieren, durch einen drahtlosen Zugangspunkt, eines ersten Hotspots mit einem unverschlüsselten Attribut und eines zweiten Hotspots mit einem verschlüsselten Attribut, wobei der erste Hotspot und der zweite Hotspot in einem drahtlosen Zugangspunkt konfiguriert sind,
Konfigurieren einer Umschaltrichtlinie zwischen dem ersten Hotspot und dem zweiten Hotspot, wobei die Umschaltrichtlinie zum Umschalten einer Kommunikation zwischen einem Terminal und dem ersten Hotspot auf eine Kommunikation zwischen dem Terminal und dem zweiten Hotspot verwendet wird, **dadurch gekennzeichnet, dass**,
die Umschaltrichtlinie eine Verbindungsumschaltrichtlinie zwischen Netzwerkparametern ist, die dem ersten Hotspot und dem zweiten Hotspot entsprechen, und ein Verbindungskanal zwischen einem Netzwerk, das dem ersten Hotspot entspricht, und einem Netzwerk, das dem zweiten Hotspot entspricht, gemäß der Umschaltrichtlinie eingerichtet wird.

2. Das Verfahren nach Anspruch 1, wobei Netzwerkparameter des ersten Hotspots Folgendes umfassen: einen SSID1, wobei ein Sicherheitstyp ein unverschlüsselter Typ ist und ein Netzwerktyp ein Broadcast-Typ ist, und Netzwerkparameter des zweiten Hotspots Folgendes umfassen: einen SSID2, wobei ein Sicherheitstyp ein verschlüsselter Typ ist und ein Netzwerktyp ein Nicht-Broadcast-Typ ist.

3. Das Verfahren nach Anspruch 2, wobei der unverschlüsselte Typ ein Offener Typ ist, und der verschlüsselte Typ ein Wireless-Fidelity-Protected-Access-, WPA2-Typ, ist.

4. Das Verfahren nach Anspruch 1, wobei ein Service-Set-Identifier, SSID, des ersten Hotspots der gleiche wie ein SSID des zweiten Hotspots ist.

5. Ein Zugangsverfahren in einem drahtlosen lokalen Zugangsnetzwerk, WLAN, umfassend: Konfigurieren eines ersten Hotspots mit einem unverschlüsselten Attribut und eines zweiten Hotspots mit einem verschlüsselten Attribut, und eine Umschaltrichtlinie zwischen dem ersten Hotspot und dem zweiten Hotspot, wobei der erste Hotspot und der zweite Hotspot in einem drahtlosen Zugangspunkt konfiguriert sind, wobei das Verfahren ferner umfasst:
Empfangen, durch einen drahtlosen Zugangspunkt, einer Wireless Fidelity Protected Setup-, WPS-Anforderung-Nachricht, die von einem Terminal über eine erste Verbindung gesendet wird,
Übertragen der WPS-Anforderung-Nachricht von der ersten Verbindung, die dem ersten Hotspot entspricht, zu einer zweiten Verbindung, die dem zweiten Hotspot entspricht, gemäß der Umschaltrichtlinie zwischen dem ersten Hotspot und dem zweiten Hotspot, und Einrichten eines WPS-Session-Negotiation-Verfahrens mit dem Terminal über die zweite Verbindung; wobei die erste Verbindung eine zwischen dem Terminal und dem ersten Hotspot eingerichtete Verbindung ist und die zweite Verbindung eine zwischen dem Terminal und dem zweiten Hotspot eingerichtete Verbindung ist, **dadurch gekennzeichnet, dass**,
der Verbindungskanal zwischen dem Netzwerk, das dem ersten Hotspot entspricht, und dem Netzwerk, das dem zweiten Hotspot entspricht, gemäß der Umschaltrichtlinie zwischen dem ersten Hotspot und dem zweiten Hotspot eingerichtet wird; die WPS-Anforderung-Nachricht wird von der ersten Verbindung, die dem ersten Hotspot entspricht, zu der zweiten Verbindung, die dem zweiten Hotspot entspricht, über den Verbindungskanal übertragen.

6. Das Verfahren nach Anspruch 5, wobei das Verfahren vor dem Empfangen der WPS-Anforderung-Nachricht, die vom Terminal über die erste Verbindung gesendet wird, ferner Folgendes umfasst:
Empfangen einer vom Terminal über die erste Verbindung gesendeten Netzwerkverbindungsanforderung,
Überprüfen einer Benutzeridentität des Terminals auf Rechtmäßigkeit und Einrichten eines WPS-Session-Negotiation-Verfahrens mit dem Terminal über die erste Verbindung nach bestandener Verifizierung.

7. Das Verfahren nach Anspruch 5, wobei ein Service-Set-Identifier, SSID, des ersten Hotspots der gleiche ist wie ein SSID des zweiten Hotspots.

8. Ein drahtloser Zugangspunkt, AP, umfassend: ein erstes Konfigurationsmodul und ein zweites Konfigurationsmodul, wobei,
das erste Konfigurationsmodul angeordnet ist, um einen ersten Hotspot mit einem unverschlüsselten Attribut und einen zweiten Hotspot mit einem verschlüsselten Attribut zu konfigurieren, wobei der erste Hotspot und der zweite Hotspot in einem drahtlosen Zugangspunkt konfiguriert sind,
das zweite Konfigurationsmodul angeordnet ist, um eine Umschaltrichtlinie zwischen dem ersten Hotspot und dem zweiten Hotspot zu konfigurieren, wobei die Umschaltrichtlinie verwendet wird, um eine Kommunikation zwischen einem Terminal und dem ersten Hotspot zu einer Kommunikation zwischen dem Terminal und dem zweiten Hotspot umzuschalten, **dadurch gekennzeichnet, dass**,
die Umschaltrichtlinie eine Verbindungsumschaltrichtlinie zwischen Netzwerkparametern ist, die dem ersten Hotspot und dem zweiten Hotspot entsprechen, und ein Verbindungskanal zwischen einem Netzwerk, das dem ersten Hotspot entspricht, und einem Netzwerk, das dem zweiten Hotspot entspricht, gemäß der Umschaltrichtlinie eingerichtet wird.

9. Der drahtlose AP nach Anspruch 8, wobei Netzwerkparameter des ersten Hotspots Folgendes umfassen: einen SSID1, wobei ein Sicherheitstyp ein unverschlüsselter Typ ist und ein Netzwerktyp ein Broadcast-Typ ist; Netzwerkparameter des zweiten Hotspots Folgendes umfassen: einen SSID2, wobei ein Sicherheitstyp ein verschlüsselter Typ ist und ein Netzwerktyp ein Nicht-Broadcast-Typ ist.

10. Der drahtlose AP nach Anspruch 9, wobei der unverschlüsselte Netzwerktyp ein Offener Typ und der verschlüsselte Netzwerktyp ein WPA2-Typ ist.

11. Der drahtlose AP nach Anspruch 8, wobei ein Service-Set-Identifier, SSID, des ersten Hotspots der gleiche ist wie ein SSID des zweiten Hotspots.

12. Ein drahtloser Zugangspunkt, AP, umfassend: ein erstes Konfigurationsmodul, ein zweites Konfigurationsmodul, ein Empfangsmodul und ein Verbindungsverwaltungsmodul, wobei,
das erste Konfigurationsmodul angeordnet ist, um einen ersten Hotspot mit einem unverschlüsselten Attribut und einen zweiten Hotspot mit einem verschlüsselten Attribut zu konfigurieren, wobei der erste Hotspot und der zweite Hotspot in einem drahtlosen Zugangspunkt konfiguriert sind,
das zweite Konfigurationsmodul angeordnet ist, um eine Umschaltrichtlinie zwischen dem ersten Hotspot und dem zweiten Hotspot zu konfigurieren, wobei die Umschaltrichtlinie verwendet wird, um eine Kommunikation zwischen einem Terminal und dem ersten Hotspot zu einer Kommunikation zwischen dem Terminal und dem zweiten Hotspot umzuschalten,
das Empfangsmodul so eingerichtet ist, dass es eine WPS-Anforderung-Nachricht empfängt, die vom Terminal über eine erste Verbindung gesendet wird, und
das Verbindungsverwaltungsmodul angeordnet ist, um die WPS-Anforderung-Nachricht von der ersten Verbindung, die dem ersten Hotspot entspricht, zu einer zweiten Verbindung, die dem zweiten Hotspot entspricht, gemäß der Umschaltrichtlinie zwischen dem ersten Hotspot und dem zweiten Hotspot zu übertragen und ein WPS-Session-Negotiation-Verfahren mit dem Terminal über die zweite Verbindung einzurichten; wobei die erste Verbindung eine zwischen dem Terminal und dem ersten Hotspot eingerichtete Verbindung ist und die zweite Verbindung eine zwischen dem Terminal und dem zweiten Hotspot eingerichtete Verbindung ist, **dadurch gekennzeichnet, dass**,
der Verbindungskanal zwischen dem Netzwerk, das dem ersten Hotspot entspricht, und dem Netzwerk, das dem zweiten Hotspot entspricht, gemäß der Umschaltrichtlinie zwischen dem ersten Hotspot und dem zweiten Hotspot eingerichtet wird; die WPS-Anforderung-Nachricht von der ersten Verbindung, die dem ersten Hotspot entspricht, zu der zweiten Verbindung, die dem zweiten Hotspot entspricht, über den Verbindungskanal übertragen wird.

13. Der drahtlose AP nach Anspruch 12, wobei der drahtlose AP ferner umfasst:
ein Verifizierungsmodul, das dazu eingerichtet ist, eine Benutzeridentität des Terminals auf Rechtmäßigkeit zu verifizieren, wenn eine Netzwerkverbindungsanforderung empfangen wird, die vom Terminal über die erste Verbindung gesendet wird, und Einrichten eines WPS-Session-Negotiation-Verfahrens mit dem Terminal über die erste Verbindung nach bestandener Verifizierung.

14. Der drahtlose AP nach Anspruch 12, wobei ein Service-Set-Identifier, SSID, des ersten Hotspots der gleiche ist wie ein SSID des zweiten Hotspots.

15. Ein Computerlesbares Medium, umfassend Anweisungen, die, wenn sie von einem Computer ausgeführt werden, den Computer veranlassen, das Verfahren eines der Ansprüche 1-7 auszuführen.

## Revendications

1. Procédé de configuration de point d'accès dans un réseau d'accès local sans fil, WLAN, le procédé comprenant :
la configuration, par un point d'accès sans fil, d'un premier point d'accès avec un attribut non crypté et un deuxième point d'accès avec un attribut crypté, dans lequel le premier point d'accès et le deuxième point d'accès sont configurés dans un unique point d'accès sans fil ;
la configuration d'une politique de commutation entre le premier point d'accès et le deuxième point d'accès, dans lequel la politique de commutation est utilisée pour commuter une communication entre un terminal et le premier point d'accès à une communication entre le terminal et le deuxième point d'accès ; **caractérisé en ce que**,
la politique de commutation est une politique de commutation de connexion entre des paramètres de réseau correspondant au premier point d'accès et au deuxième point d'accès, et un canal de connexion est établi entre un réseau correspondant au premier point d'accès et un réseau correspondant au deuxième point d'accès en fonction de la politique de commutation.

2. Procédé selon la revendication 1, dans lequel des paramètres de réseau du premier point d'accès comprennent : un SSID1, un type de sécurité étant un type non crypté, et un type de réseau étant un type broadcast ; et des paramètres de réseau du deuxième point d'accès comprennent : un SSID2, un type de sécurité étant un type crypté, et un type de réseau étant un type non de broadcast.

3. Procédé selon la revendication 2, dans lequel le type non crypté est un type ouvert ; et le type crypté est un type d'accès protégé de fidélité sans fil, WPA2.

4. Procédé selon la revendication 1, dans lequel un identificateur d'ensemble de services, SSID, du premier point d'accès est le même qu'un SSID du deuxième point d'accès.

5. Procédé d'accès dans un réseau d'accès local sans fil, WLAN, comprenant : la configuration d'un premier point d'accès avec un attribut non crypté et un deuxième point d'accès avec un attribut crypté, et d'une politique de commutation entre le premier point d'accès et le deuxième point d'accès, dans lequel le premier point d'accès et le deuxième point d'accès sont configurés dans un point d'accès sans fil ; le procédé comprenant en outre :
la réception, par un point d'accès sans fil, d'un message de demande d'installation protégée de fidélité sans fil, WPS, envoyé par un terminal par le biais d'une première liaison ;
le transfert du message de demande WPS de la première liaison correspondant au premier point d'accès à une deuxième liaison correspondant au deuxième point d'accès en fonction de la politique de commutation entre le premier point d'accès et le deuxième point d'accès, et l'établissement d'une procédure de négociation de session WPS avec le terminal par le biais de la deuxième liaison ; dans lequel la première liaison est une liaison établie entre le terminal et le premier point d'accès, et la deuxième liaison est une liaison établie entre le terminal et le deuxième point d'accès, **caractérisé en ce que**,
le canal de connexion entre le réseau correspondant au premier point d'accès et le réseau correspondant au deuxième point d'accès est établi en fonction de la politique de commutation entre le premier point d'accès et le deuxième point d'accès ; le message de demande WPS est transféré de la première liaison correspondant au premier point d'accès à la deuxième liaison correspondant au deuxième point d'accès par le biais du canal de connexion.

6. Procédé selon la revendication 5, dans lequel avant la réception du message de demande WPS envoyé par le terminal par le biais de la première liaison, procédé comprend en outre :
la réception d'une demande de connexion au réseau envoyée par le terminal par le biais de la première liaison ;
la vérification d'une identité d'utilisateur du terminal en légalité, et l'établissement d'une procédure de négociation de session WPS avec le terminal par le biais de la première liaison après que la vérification a réussi.

7. Procédé selon la revendication 5, dans lequel un identificateur d'ensemble de services, SSID, du premier point d'accès est la même qu'un SSID du deuxième point d'accès.

8. Point d'accès sans fil, AP, comprenant : un premier module de configuration et un deuxième module de configuration ; dans lequel le premier module de configuration est agencé pour configurer un premier point d'accès avec un attribut non crypté et un deuxième point d'accès avec un attribut crypté, dans lequel le premier point d'accès et le deuxième point d'accès sont configurés dans un unique point d'accès sans fil ;
le deuxième module de configuration est agencé pour configurer une politique de commutation entre le premier point d'accès et le deuxième point d'accès, dans lequel la politique de commutation est utilisée pour commuter une communication entre un terminal et le premier point d'accès à une communication entre le terminal et le deuxième point d'accès ; **caractérisé en ce que**,
la politique de commutation est une politique de commutation de connexion entre des paramètres de réseau correspondant au premier point d'accès et le deuxième point d'accès, et un canal de connexion est établi entre un réseau correspondant au premier point d'accès et un réseau correspondant au deuxième point d'accès en fonction de la politique de commutation.

9. AP sans fil selon la revendication 8, dans lequel des paramètres de réseau du premier point d'accès comprennent : un SSID1, un type de sécurité étant un type non crypté, et un type de réseau étant un type de broadcast ; et des paramètres de réseau du deuxième point d'accès comprennent : un SSID2, un type de sécurité étant un type crypté, et un type de réseau étant un type non de broadcast.

10. AP sans fil selon la revendication 9, dans lequel le type de réseau non crypté est un type ouvert ; et le type de réseau crypté est un type WPA2.

11. AP sans fil selon la revendication 8, dans lequel un identificateur d'ensemble de services, SSID, du premier point d'accès est la même qu'un SSID du deuxième point d'accès.

12. Point d'accès sans fil, AP, comprenant: un premier module de configuration, un deuxième module de configuration, un module de réception et un module de gestion de connexion ; dans lequel le premier module de configuration est agencé pour configurer un premier point d'accès avec un attribut non crypté et un deuxième point d'accès avec un attribut crypté, dans lequel le premier point d'accès et le deuxième point d'accès sont configurés dans un point d'accès sans fil ;
le deuxième module de configuration est agencé pour configurer une politique de commutation entre le premier point d'accès et le deuxième point d'accès, dans lequel la politique de commutation est utilisée pour commuter une communication entre un terminal et le premier point d'accès à une communication entre le terminal et le deuxième point d'accès ;
le module de réception est agencé pour recevoir un message de demande WPS envoyé par le terminal par le biais d'une première liaison ; et
le module de gestion de connexion est agencé pour transférer le message de demande WPS de la première liaison correspondant au premier point d'accès à une deuxième liaison correspondant au deuxième point d'accès en fonction de la politique de commutation entre le premier point d'accès et le deuxième point d'accès, et établir une procédure de négociation de session WPS avec le terminal par le biais de la deuxième liaison ; dans lequel la première liaison est une liaison établie entre le terminal et le premier point d'accès, et la deuxième liaison est une liaison établie entre le terminal et le deuxième point d'accès, **caractérisé en ce que**,
le canal de connexion entre le réseau correspondant au premier point d'accès et le réseau correspondant au deuxième point d'accès est établi en fonction de la politique de commutation entre le premier point d'accès et le deuxième point d'accès ; le message de demande WPS est transféré de la première liaison correspondant au premier point d'accès à la deuxième liaison correspondant au deuxième point d'accès par le biais du canal de connexion.

13. AP sans fil selon la revendication 12, dans lequel l'AP sans fil comprend en outre :
un module de vérification agencé pour vérifier une identité d'utilisateur du terminal en légalité lors de la réception d'une demande de connexion au réseau envoyée par le terminal par le biais de la première liaison, et établir une procédure de négociation de session WPS avec le terminal par le biais de la première liaison après que la vérification a réussi.

14. AP sans fil selon la revendication 12, dans lequel un identificateur d'ensemble de services, SSID, du premier point d'accès est le même qu'un SSID du deuxième point d'accès.

15. Support lisible par ordinateur comprenant des instructions qui, quand elles sont exécutées par un ordinateur, amènent l'ordinateur à exécuter le procédé selon l'une quelconque des revendications 1 à 7.
